# EUROPÄISCHE PATENTSCHRIFT

(11) **EP 1 867 453 B1**
(45) Veröffentlichungstag und Bekanntmachung des Hinweises auf die Patenterteilung: **14.09.2011**
(21) Anmeldenummer: 07007466.1
(22) Anmeldetag: 12.04.2007
(51) Int. Cl.: B29B 13/02, A46D 9/00, B29C 35/08

(54) **Verfahren zum lokalen Erwärmen von Gegenständen**
Method for local heating of objects
Procédé de réchauffement local d'objets

(30) Priorität: 16.06.2006 DE 102006027788
(43) Veröffentlichungstag der Anmeldung: 19.12.2007
(73) Patentinhaber: Braun GmbH, 61476 Kronberg im Taunus (DE)
(72) Erfinder: Fuchs, Hans-Herbert, 65719 Hofheim (DE); Majthan, Rudolf, 65760 Eschborn (DE); Firatli, Ahmet Cem, 65207 Wiesbaden (DE)

(56) Entgegenhaltungen:
- WO-A-2004/040191
- WO-A-2004/082428
- DE-U1- 9 116 024
- US-A- 4 411 610
- US-A1- 2003 094 904
- US-A1- 2003 131 433

## Beschreibung

Die Erfindung betrifft ein Verfahren und eine Vorrichtung zum lokalen Erwärmen von Zahnbürsten durch elektromagnetische Strahlung bei gleichzeitiger Kühlung der näheren Umgebung des zu erwärmenden Bereichs der Zahnbürste durch ein strömendes Fluid. Die Vorrichtung enthält ein eine elektromagnetische Strahlungsquelle aufweisendes und in Richtung der zu erwärmenden Zahnbürste offenes Gehäuse, in welchem zur Führung der elektromagnetischen Strahlen ein in Richtung der zu erwärmenden Zahnbürste offener Strahlenführungskanal angeordnet ist, wobei zwischen dem Strahlenführungskanal und dem Gehäuse ein Kanal für ein mittels einer Pumpe, eines Ventilators oder dergleichen zu förderndes Fluid gebildet ist.

### Stand der Technik

Ein Verfahren der eingangs genannten Art ist bereits aus der WO 2004/082428 A2 bekannt. Dabei wird ein Zahnbürstenkopf lokal erwärmt. Zur Erwärmung des Zahnbürstenkopfes kommen dabei Vorrichtungen der eingangs genannten Art zum Einsatz. Solche Vorrichtungen sind beispielsweise bereits aus den Druckschriften JP 10118201 A1, JP 10118202 A1 und US 4680448 bekannt.

Die US 4,411,610 offenbart eine Vorrichtung zum Erwärmen von Flaschen aus Kunststoff mittels einer IR-Strahlung im Bereich der Seitenwandung, wozu ein geschlossenes Gehäuse mit den IR-Strahlen in einem direkten Kontakt mit der Seitenwandung der Flasche angeordnet ist. Außerhalb des Gehäuses wird der Bodenbereich der Flasche mit Kühlluft von einem Gebläse beaufschlagt. Ein Erwärmen ist hier großflächig im Bereich der Seitenwandung vorgesehen.

Die US 2003/0094904 A1 offenbart eine Vorrichtung gemäß dem Oberbegriff des Anspruchs 7 zum einseitigen Bestrahlen von Gegenständen mittels einer UV-Strahlung. Zum Kühlen des UV-Strahlers wird dieser mit Kühlluft von einem Gebläse beaufschlagt, die dadurch aufgeheizt zusätzlich den Gegenstand mit erhitzter Kühlluft beaufschlagt.

Aus der WO 2004/040191 A1 ist eine Vorrichtung zum Bestrahlen von photosensitiven Substraten mittels UV-Strahlung bekannt. Zur Kühlung des UV-Strahles ist im geschlossenen Gehäuse ein zirkulierender Luftstrom vorgesehen. Der UV-Strahlenausgang des geschlossenen Gehäuses ist durch ein UV-Filter abgeschlossen.

Die DE 91 16 024 U1 offenbart ein Handgerät mit einer Aushärteeinrichtung für photopolymerisierbare Materialien, wobei das Material nebst einer UV-Strahlung mit einer dazu konzentrischen Kühlluft beaufschlagt wird.

Mit einem Verfahren gemäß dem Oberbegriff des Anspruchs 1 werden nach der WO 2004/082428 A2 Zahnbürsten, insbesondere spritzgießtechnisch hergestellte Kunststoffteile, die nicht immer in der gewünschten Endkontur hergestellt werden können, weiterverarbeitet. Diese Zahnbürsten werden deshalb zuerst in einer Zwischenkontur hergestellt und in einem weiteren Bearbeitungsschritt in die gewünschte Endkontur umgeformt.

Zum gezielten Umformen erfolgt die lokale Erwärmung der Zahnbürste mittels elektromagnetischer Strahlen bei gleichzeitiger Kühlung der näheren Umgebung des zu erwärmenden Bereichs der Zahnbürste durch ein strömendes Fluid. Bei der lokalen Erwärmung der Zahnbürste ist es allerdings notwendig, dass andere Teile der Zahnbürste, welche in näherer Umgebung des lokal zu erwärmenden Bereichs liegen und gegebenenfalls sehr wärmeempfindlich sind, unbeschädigt bleiben. Dazu ist es vorgesehen, die elektromagnetische Strahlung mittels Reflektoren und Blenden auf bestimmte Areale des lokal zu erwärmenden Gegenstandes zu begrenzen.

Um die Wärmeleistung der elektromagnetischen Strahlung schnell übertragen zu können, liegen diese Reflektoren und Blenden möglichst nahe an der zu erwärmenden Oberfläche der Zahnbürste. Dabei erwärmen sich mit der Zeit auch diese Reflektoren und Blenden, die ihrerseits dann selbst Wärme abstrahlen. Dadurch geht die lokale Begrenzung der Erwärmung durch die elektromagnetische Strahlung verloren. Um die Blenden und Reflektoren zu kühlen, wird deshalb ständig Umgebungsluft angesaugt. Die angesaugte kühle Luft streicht an dem zu erwärmenden Bereich des Gegenstandes und durch den Strahlengang der elektromagnetischen Strahlen an den Blenden und Reflektoren sowie dem elektromagnetischen Strahler vorbei und kühlt diese. Die Blenden und Reflektoren halten somit ihre abschirmende Wirkung bei.

### Problem

Allerdings hat es sich gezeigt, dass dadurch ungewollte und ungleichmäßige kühle und heiβe Regionen im Bereich der Reflektoren und Blenden im Strahlengang der elektromagnetischen Strahlen auftreten, die eine gleichmäßige Erwärmung lokal zu erwärmender Gegenstände und damit die Herstellung solcher Gegenstände, insbesondere in Massenfertigung, unmöglich machen.

### Aufgabenstellung

Aufgabe der vorliegenden Erfindung ist es deshalb, ein Verfahren bzw. eine Vorrichtung zur Verfügung zu stellen, mit welcher eine gleichmäßige Produktion lokal zu erwärmender Zahnbürste und damit eine Massenfertigung derselben möglich ist.

### Erfindung und vorteilhafte Wirkungen

Gelöst wird diese Aufgabe durch ein Verfahren mit den Merkmalen des Anspruchs 1 und durch eine Vorrichtung mit den Merkmalen des Anspruchs 7. Vorteilhafte Ausgestaltungen der Erfindung finden sich in den Unteransprüchen.

Dadurch, dass bei dem erfindungsgemäßen Verfahren das strömende Fluid und die in Richtung des zu erwärmenden Bereichs geführten IR-Strahlen über vollständig räumlich voneinander getrennte Wege geführt werden, hat das strömende Fluid keine kühlende Wirkung mehr auf den lokal zu erwärmenden Bereich. Das Fluid kühlt aber weiterhin das Strahlergehäuse sowie den IR-Strahler selbst. Somit kann das Fluid nach wie vor die gewollte Kühlfunktion, insbesondere an den Blenden und Reflektoren, entfalten. Dadurch ist eine zeitlich stabile und entlang des Strahlausgangs lokal definierte, auf einen Bestrahlungsbereich begrenzte, sowie eine sehr gleichmäßige IR-Strahlung zur Erwärmung der Zahnbürste gewährleistet, die somit auch in der Massenproduktion erfolgreich eingesetzt werden kann, wobei das strömende Fluid und die IR-Strahlen räumlich vollständig voneinander entkoppelt sind. Durch diese Maßnahme ist die Kühlung durch das strömende Fluid im Wesentlichen unabhängig von der Strahlungsquelle, die gegebenenfalls separat gekühlt wird.

Weiterhin hat es sich gezeigt, dass eine besonders effiziente Kühlung durch Verwendung eines Gases als Fluid gegeben ist. Als kostengünstige Alternative hat sich dabei die Verwendung von Luft herausgestellt.

Nach einer vorteilhaften Ausgestaltung der Erfindung hat es sich als sinnvoll erwiesen, dass die IR-Strahlung diffus auf den zu erwärmenden Bereich geführt wird. Durch diese Maßnahme wird eine besonders gleichmäßige Erwärmung des lokalen Bereiches der Zahnbürste erzielt, so dass in diesem Bereich nach Fertigstellung des Endgegenstandes eine sehr homogene Struktur vorliegt. Es ist daher der Entstehung von Inhomogenitäten innerhalb der Struktur des zu erwärmenden Bereichs, die zu unerwünschten Materialeigenschaften führen könnten, somit wirkungsvoll vorgebeugt.

Als besonders vorteilhaft hat es sich erwiesen, wenn die zu erwärmende Zahnbürste von wenigstens zwei Seiten mit IR-Strahlung bestrahlt wird. Durch diese Maßnahme wird erreicht, dass die Homogenität des herzustellenden Endproduktes nochmals erhöht wird.

Insbesondere eignet sich das erfindungsgemäße Verfahren zur Erwärmung von Kunststoffgegenständen, die gegebenenfalls während des Erwärmens mechanisch umgeformt werden. Hierbei kann das Verfahren insbesondere zur Herstellung von Zahnbürstenköpfen verwendet werden.

Dadurch, dass bei der erfindungsgemäßen Vorrichtung das Gehäuse in wenigstens einer seiner zu der Gehäuseöffnung im Wesentlichen senkrecht angeordneten Gehäusewandungen wenigstens eine Ansaugöffnung aufweist, welche in den Kanal mündet, ist erreicht, dass der Strahlausgang für die Fluidströmung im Wesentlichen gesperrt ist. Eine homogene IR-Strahlung zur Erwärmung der herzustellenden Zahnbürste ist dadurch gewährleistet. Als Folge davon ist der zu erwärmende Bereich nach erfolgter Abkühlung in seiner Endstruktur ebenfalls sehr homogen. Materialfehler in Folge von Inhomogenitäten sind somit vermieden.

Nach einer vorteilhaften Ausgestaltung der erfindungsgemäßen Vorrichtung wird die Öffnung des Strahlenführungskanals mittels einer für IR-Strahlung durchlässigen Scheibe geschlossen. Dadurch ist eine homogene IR-Strahlung gewährleistet, die eine gleichmäßige Erwärmung des lokalen Bereiches der Zahnbürste sichergestellt. Es ist somit der Entstehung von Inhomogenitäten wirkungsvoll vorgebeugt.

Die Scheibe ist dabei als Diffusor für die elektromagnetische Strahlung ausgebildet, wodurch die Homogenität der elektromagnetischen Strahlung nochmals erhöht ist.

Zur exakten Positionierung der Zahnbürste im Strahlengang der IR-Strahlung ist eine Positioniereinrichtung vorgesehen. Die Zahnbürsten werden dabei mittels einer Zuführeinrichtung der Positioniereinrichtung zugeführt. Über eine Zeitsteuerung wird die zu erwärmende Zahnbürste für eine zuvor genau definierte Zeitspanne von der Positioniereinrichtung im Strahlengang der IR-Strahlung gehalten. Anschließend wird die Zahnbürste nach erfolgter Erwärmung und gegebenenfalls Abkühlung durch eine Abtransporteinrichtung von der Vorrichtung weg befördert.

Zur Steuerung und/oder Programmierung der Positioniereinrichtung und/oder der Zuführeinrichtung und/oder der Zeitsteuerung und/oder der Abtransporteinrichtung ist ein Mikroprozessor vorgesehen.

### Ausführungsbeispiel

Weitere Ziele, Vorteile, Merkmale und Anwendungsmöglichkeiten der vorliegenden Erfindung ergeben sich aus der nachfolgenden Beschreibung eines Ausführungsbeispieles anhand der Figuren. Dabei bilden alle beschriebenen und/oder bildlich dargestellten Merkmale für sich oder in beliebiger sinnvoller Kombination den Gegenstand der vorliegenden Erfindung, auch unabhängig von ihrer Zusammenfassung in den Ansprüchen oder deren Rückbeziehung.

Es zeigen:
- Figur 1: eine Vorrichtung nach dem Stand der Technik,
- Figur 2: ein Ausführungsbeispiel einer erfindungsgemäßen Vorrichtung,
- Figur 3: einen Zahnbürstenkopf vor einer Behandlung mit einem erfindungsgemäßen Verfahren durch eine erfindungsgemäße Vorrichtung und
- Figur 4: den Zahnbürstenkopf gemäß Figur 3 während einer Behandlung mit einem erfindungsgemäßen Verfahren durch eine erfindungsgemäße Vorrichtung.

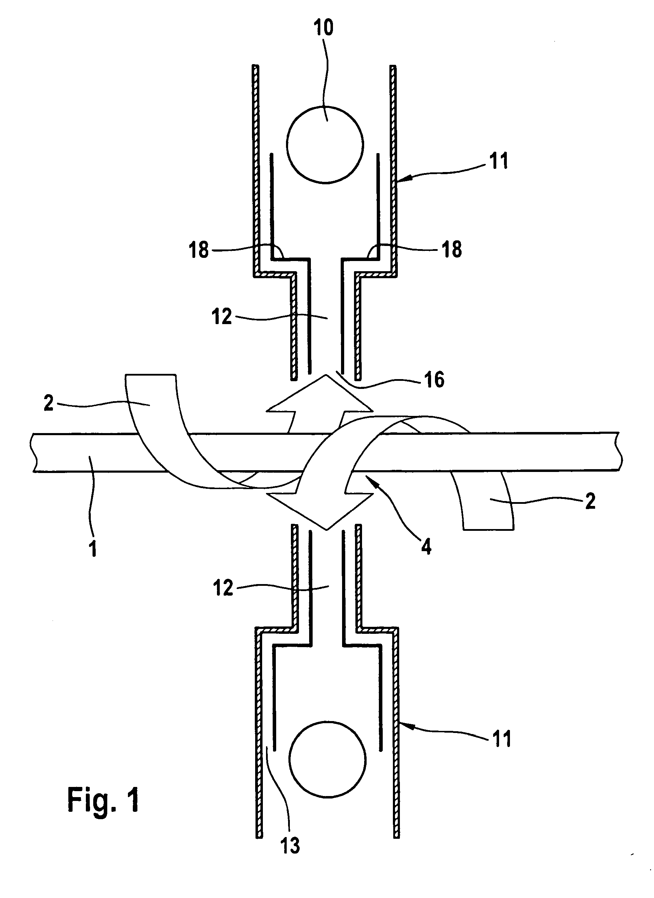

Figur 1 beschreibt eine Vorrichtung nach dem Stand der Technik. Dabei wird ein Gegenstand 1 in einem lokalen Bereich 4 von zwei Strahlungsquellen 10 lokal erhitzt. Die Strahlungsquellen 10 sind dabei in einem Gehäuse 11 angeordnet. In dem Gehäuse 11 sind weiterhin einen Strahlungskanal 12 bildende Leitflächen 18 vorgesehen, durch welche die elektromagnetische Strahlung auf den lokalen Bereich 4 des Gegenstandes 1 geführt wird. Die Leitflächen 18 weisen dabei eine Öffnung für die elektromagnetischen Strahlen auf, welche durch eine Gehäuseöffnung 16 des Gehäuses 1 auf den lokalen Bereich 4 des Gegenstandes 1 geführt werden. Durch die elektromagnetische Strahlung, welche zum Erwärmen des lokalen Bereiches 4 notwendig ist, werden auch die Luftleitfläche 18, das Gehäuse 11 und andere Teile der Vorrichtung erwärmt. Diese Teile strahlen dann selbst wieder Wärme ab, die zu einem unerwünschten Aufheizen des Gegenstandes 1 führen kann. Dadurch kann es zu ungewollten Strukturveränderungen innerhalb des Gegenstandes 1 kommen, so dass sich gegebenenfalls sogar dessen Materialeigenschaften ändern.

Um dem vorzubeugen, ist es vorgesehen, die gesamte Vorrichtung zu kühlen. Dazu wird ein Fluidstrom 2, der üblicherweise als Luftstrom ausgebildet ist, durch die Gehäuseöffnung 16 in das Gehäuseinnere gezogen. Durch dieses strömende Fluid werden die erhitzten Teile der Vorrichtung, so zum Beispiel die Leitfläche 18, das Gehäuse 11, die Strahlungsquelle 10 und dergleichen Teile, gekühlt.

Durch diese Kühlung entstehen jedoch sowohl bei der Strahlungsquelle 10 als auch bei den Strahlabschirmungen, wie beispielsweise den Leitflächen 18, ungewollte, ungleichmäßig kühle und heiße Regionen, so dass es zu einem ungleichmäßigen Erwärmen des lokalen Bereichs 4 des Gegenstandes 1 kommen kann. Eine solche ungleichmäßige Erwärmung ist unerwünscht und kann in einer Serien- beziehungsweise Massenproduktion nicht eingesetzt werden.

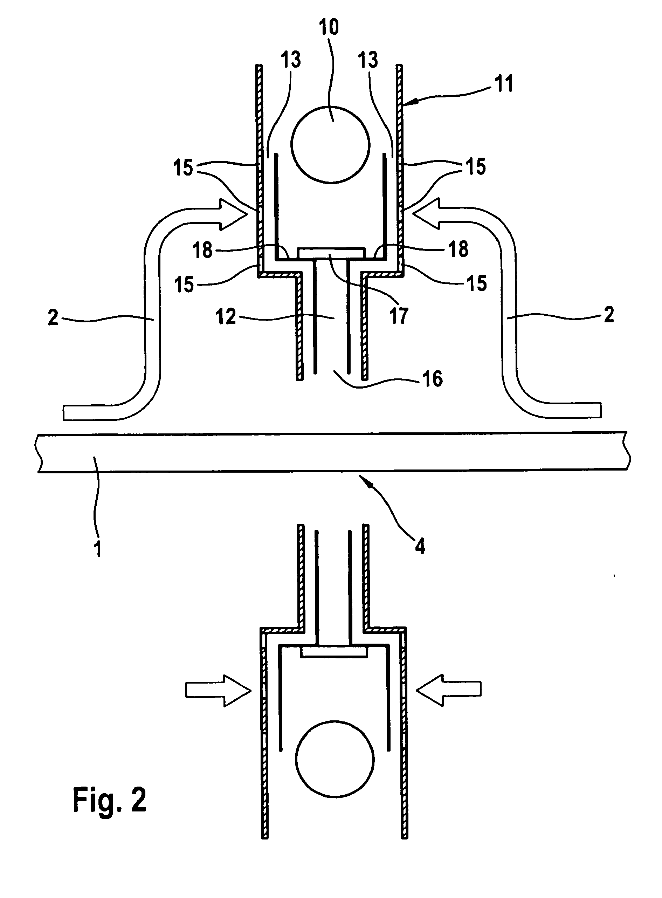

Um dies zu verhindern, ist - wie in Figur 2 dargestellt - das strömende Fluid 2 und die in Richtung des zu erwärmenden Bereichs 4 geführte elektromagnetische Strahlung über vollständig räumlich voneinander getrennte Wege geführt. Dazu sind in den Wänden des Gehäuses 11 Ansaugöffnungen 15 vorgesehen, durch welche das strömende Fluid 2 angesaugt wird. Das strömende Fluid 2 gelangt nun nicht mehr durch die Öffnung 16 des Gehäuses 11 in dessen Innenraum, sondern wird entlang eines Kanals 13 geführt, so dass es nicht in den Strahlenführungskanal 12 der elektromagnetischen Strahlung gelangt. Somit kommt es innerhalb des Strahlenführungskanals 12 nicht mehr zu den ungewollten, ungleichmäßigen kühlen und heißen Regionen der Luftleitfläche 18. Eine konstante und gleichmäßige Bestrahlung des lokalen Bereichs 4 der Zahnbürste 1 ist somit gewährleistet.

Für eine noch gleichmäßigere Bestrahlung des lokalen Bereichs 4 ist in dem Strahlenführungskanal 12 eine Scheibe 17 angeordnet, durch welche ebenfalls ein Eindringen des strömenden Fluids vermieden wird. Weiterhin ist durch die Scheibe 17 erreicht, dass die Strahlung diffus auf den lokalen Bereich 4 trifft. Auch hierdurch wird eine besonders homogene Strahlung erreicht, welche wiederum ein strukturell sehr homogenes Endprodukt der Zahnbürste 1 sicherstellt.

Die so behandelten Zahnbürsten 1 werden in der Regel von zwei Seiten bestrahlt, wie dies auch in der Figur 2 dargestellt ist. Der besseren Übersicht halber sind dort jedoch nur die Bezugszeichen auf einer Seite der Vorrichtung angezogen.

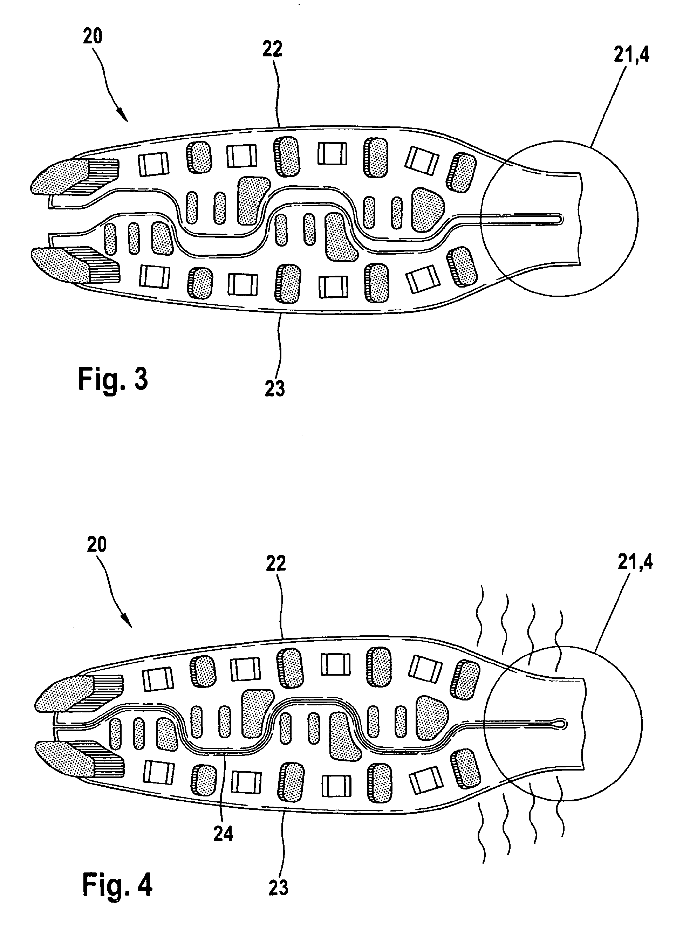

Die Figuren 3 und 4 zeigen einen Zahnbürstenkopf 20, der nach dem erfindungsgemäßen Verfahren hergestellt wird. Dieser Zahnbürstenkopf 20 ist mit mindestes zwei unabhängig voneinander bewegbaren, an einem Ende des Zahnbürstenkopfes 20 in einem Verbindungsbereich 21 federnd gelagerten Abschnitten 22, 23 versehen. Die Abschnitte 22, 23, laufen dabei in einer Ausgangskontur des Zahnbürstenkopfes 20 gemäß Figur 3 im Wesentlichen V-förmig auseinander. Mittels Erwärmung des Verbindungsbereiches 21 und mechanischer Kraftbeaufschlagung an den offenen Enden der Abschnitte 22, 23 und anschließendem Abkühlen wird der Zahnbürstenkopf 20 in eine Endkontur gemäß Figur 4 überführt. In dieser Endkontur ist zwischen den Abschnitten 22, 23 ein Schlitz 24 mit im Wesentlichen konstanter Breite ausgebildet.

Zur Erwärmung des Verbindungsbereiches 21, der bei dieser Zahnbürste 1 als lokaler Bereich 4 gemäß Figur 2 dient, ist eine Vorrichtung gemäß Figur 2 eingesetzt.

## Patentansprüche

1. Verfahren zum lokalen Erwärmen von Zahnbürsten (1) durch elektromagnetische Strahlung bei gleichzeitiger Kühlung der näheren Umgebung des zu erwärmenden Bereichs der Zahnbürste durch ein strömendes Fluid (2), **dadurch gekennzeichnet, dass** das strömende Fluid (2) und die in Richtung des zu erwärmenden Bereichs (4) geführten elektromagnetischen Strahlen über vollständig räumlich voneinander getrennte Wege geführt werden, dass die elektromagnetische Strahlung diffus mittels einer Diffusorscheibe auf den zu erwärmenden Bereich geführt wird und dass als elektromagnetische Strahlung Infrarotstrahlung verwendet wird.

2. Verfahren nach Anspruch 1, **dadurch gekennzeichnet, dass** das strömende Fluid und die elektromagnetischen Primärstrahlen räumlich vollständig voneinander entkoppelt sind.

3. Verfahren nach Anspruch 1 oder 2, **dadurch gekennzeichnet, dass** als Fluid ein Gas verwendet wird.

4. Verfahren nach einem der vorhergehenden Ansprüche, **dadurch gekennzeichnet, dass** als Fluid Luft verwendet wird.

5. Verfahren nach einem der vorhergehenden Ansprüche, **dadurch gekennzeichnet, dass** die zu erwärmende Zahnbürste (1) von wenigstens zwei Seiten mit elektromagnetischer Strahlung bestrahlt wird.

6. Verfahren nach Anspruch 5, **dadurch gekennzeichnet, dass** Zahnbürstenköpfe lokal erwärmt werden.

7. Vorrichtung zum lokalen Erwärmen von Zahnbürsten mit einem eine elektromagnetische Strahlungsquelle (10) aufweisenden und in Richtung der zu erwärmenden Zahnbürste offenen Gehäuse (11), in welchem zur Führung der elektromagnetischen Strahlen ein in Richtung der zu erwärmenden Zahnbürste offener Strahlenführungskanal (12) angeordnet ist, wobei zwischen dem Strahlenführungskanal (12) und dem Gehäuse (11) ein Kanal (13) für ein mittels einer Pumpe, eines Ventilators oder dergleichen zu förderndes Fluid gebildet ist, **dadurch gekennzeichnet, dass** das Gehäuse (11) in wenigstens einer seiner zu der Gehäuseöffnung (16) im Wesentlichen senkrecht angeordneten Gehäusewandungen wenigstens eine Ansaugöffnung (15) aufweist, welche in den Kanal (13) mündet, dass der Strahlenführungskanal (12) und der Kanal (13) räumlich vollständig voneinander getrennt sind, dass die elektromagnetische Strahlungsquelle (10) als IR-Strahler ausgebildet ist und dass die Öffnung (16) des Strahlenführungskanals (12) mittels einer für IR-Strahlung durchlässigen Scheibe (17) geschlossen ist.

8. Vorrichtung nach Anspruch 7, **dadurch gekennzeichnet, dass** die Scheibe (17) als Diffusor für die IR-Strahlung ausgebildet ist.

9. Vorrichtung nach Anspruch 7, **dadurch gekennzeichnet, dass** als Fluid Gas, insbesondere Luft, vorgesehen ist.

10. Vorrichtung nach einem der Ansprüche 7 bis 9, **dadurch gekennzeichnet, dass** eine Positioniereinrichtung vorgesehen ist, welche die Zahnbürste in dem Strahlengang der IR-Strahlung positioniert.

11. Vorrichtung nach einem der Ansprüche 7 bis 10, **dadurch gekennzeichnet, dass** eine Zuführeinrichtung vorgesehen ist, welche nacheinander eine Vielzahl von Zahnbürsten der Positioniereinrichtung zuführt.

12. Vorrichtung nach einem der Ansprüche 7 bis 11, **dadurch gekennzeichnet, dass** ein Zeitsteuerung vorgesehen ist, durch welche die Positioniereinrichtung die zu erwärmende Zahnbürste für eine zuvor genau definierte Zeitspanne im Strahlengang der IR-Strahlung hält.

13. Vorrichtung nach einem der Ansprüche 7 bis 12, **dadurch gekennzeichnet, dass** eine Abtransporteinrichtung vorgesehen ist, die die Zahnbürste nach erfolgter Erwärmung von der Vorrichtung weg befördert.

14. Vorrichtung nach einem der Ansprüche 7 bis 13, **dadurch gekennzeichnet, dass** ein Mikroprozessor zur Steuerung und/oder Programmierung der Positioniereinrichtung und/oder der Zuführeinrichtung und/oder der Zeitsteuerung und/oder der Abtransporteinrichtung vorgesehen ist.

## Claims

1. A method for locally heating toothbrushes (1) by electromagnetic radiation while simultaneously cooling the immediate vicinity of the region to be heated of the toothbrush by means of a flowing fluid (2), **characterized in that** the flowing fluid (2) and the electromagnetic radiation guided toward the region (4) to be heated are guided along paths that are spatially completely separated from one another, the electromagnetic radiation is diffusely guided by means of a diffuser disk onto the region to be heated, and infrared radiation is used as the electromagnetic radiation.

2. The method according to claim 1, **characterized in that** the flowing fluid and the primary electromagnetic radiation are spatially completely decoupled from one another.

3. The method according to claim 1 or 2, **characterized in that** a gas is used as the fluid.

4. A method according to any one of the preceding claims, **characterized in that** air is used as the fluid.

5. A method according to any one of the preceding claims, **characterized in that** the toothbrush (1) to be heated is irradiated from at least two sides with electromagnetic radiation.

6. The method according to claim 5, **characterized in that** toothbrush heads are locally heated.

7. A device for locally heating toothbrushes, comprising a housing (11) that has an electromagnetic radiation source (10) and is open toward the toothbrush to be heated, a radiation guide channel (12) that is open toward the toothbrush to be heated being disposed in the housing for guiding the electromagnetic radiation, a channel (13) for a fluid to be delivered by means of a pump, a fan, or the like being formed between the radiation guide channel (12) and the housing (11), **characterized in that**, in at least one of the housing walls disposed substantially perpendicular to the housing orifice (16), the housing (11) has at least one suction orifice (15) which opens into the channel (13), the radiation guide channel (12) and the channel (13) are spatially completely separated from one another, the electromagnetic radiation source (10) is designed in the form of an infrared radiator and the orifice (16) of the radiation guide channel (12) is closed by means of a disk (17) pervious to infrared radiation.

8. The device according to claim 7, **characterized in that** the disk (17) is designed in the form of a diffuser for the infrared radiation.

9. The device according to claim 7, **characterized in that** a gas, in particular air, is provided as the fluid.

10. A device according to any one of claims 7 to 9, **characterized in that** a positioning unit which positions the toothbrush in the beam path of the infrared radiation is provided.

11. A device according to any one of claims 7 to 10, **characterized in that** a feed unit which successively feeds a plurality of toothbrushes to the positioning unit is provided.

12. A device according to any one of claims 7 to 11, **characterized in that** a timer is provided, by which timer the positioning unit holds the toothbrush to be heated in the beam path of the infrared radiation for a precisely predefined duration.

13. A device according to any one of claims 7 to 12, **characterized in that** a removal unit which transports the toothbrush away from the device after the toothbrush has been heated is provided.

14. A device according to any one of claims 7 to 13, **characterized in that** a microprocessor for controlling and/or programming the positioning unit and/or the feed unit and/or the timer and/or the removal unit is provided.

## Revendications

1. Procédé de réchauffement local de brosses à dents (1) par rayonnement électromagnétique tout en refroidissant simultanément l'environnement proche de la zone de la brosse à dents à réchauffer par un écoulement de fluide (2), **caractérisé en ce que** l'écoulement de fluide (2) et les rayons électromagnétiques guidés en direction de la zone (4) à réchauffer sont acheminés par des chemins complètement séparés l'un de l'autre dans l'espace, **en ce que** le rayonnement électromagnétique est guidé de façon diffuse sur la zone à réchauffer à l'aide d'un disque diffuseur et **en ce que** le rayonnement infrarouge est utilisé comme rayonnement électromagnétique.

2. Procédé selon la revendication 1, **caractérisé en ce que** l'écoulement de fluide et le rayonnement primaire électromagnétique sont complètement découplés l'un de l'autre dans l'espace.

3. Procédé selon la revendication 1 ou 2, **caractérisé en ce qu'**un gaz est utilisé comme fluide.

4. Procédé selon l'une des revendications précédentes, **caractérisé en ce que** de l'air est utilisé comme fluide.

5. Procédé selon l'une des revendications précédentes, **caractérisé en ce que** la brosse à dents à réchauffer (1) est exposée au rayonnement électromagnétique par au moins deux côtés.

6. Procédé selon la revendication 5, **caractérisé en ce que** les têtes de brosse à dents sont réchauffées localement.

7. Dispositif de réchauffement local de brosses à dents doté d'un boîtier (11) présentant une source de rayonnement électromagnétique (10) et ouvert en direction de la brosse à dents à réchauffer, dans lequel est disposé un canal de guidage du rayonnement (12) ouvert en direction de la brosse à dents à réchauffer et permettant de guider les rayons électromagnétiques, un canal (13) destiné à un fluide à véhiculer au moyen d'une pompe, d'un ventilateur ou similaire étant formé entre le canal de guidage du rayonnement (12) et le boîtier (11), **caractérisé en ce que** le boîtier (11) présente, dans au moins une de ses parois de boîtier disposées sensiblement perpendiculairement à l'ouverture de boîtier (16), au moins une ouverture d'aspiration (15) qui débouche dans le canal (13), **en ce que** le canal de guidage du rayonnement (12) et le canal (13) sont complètement séparés l'un de l'autre dans l'espace, **en ce que** la source de rayonnement électromagnétique (10) est conçue sous forme d'émetteur IR et **en ce que** l'ouverture (16) du canal de guidage du rayonnement (12) est fermée au moyen d'un disque (17) perméable aux IR.

8. Dispositif selon la revendication 7, **caractérisé en ce que** le disque (17) est conçu sous forme de diffuseur pour le rayonnement IR.

9. Dispositif selon la revendication 7, **caractérisé en ce que** du gaz, en particulier de l'air, est prévu comme fluide.

10. Dispositif selon l'une des revendications 7 à 9, **caractérisé en ce qu'**un dispositif de positionnement est prévu, qui positionne la brosse à dents dans la trajectoire du rayonnement IR.

11. Dispositif selon l'une des revendications 7 à 10, **caractérisé en ce qu'**un dispositif d'acheminement est prévu, qui achemine successivement une multitude de brosses à dents vers le dispositif de positionnement.

12. Dispositif selon l'une des revendications 7 à 11, **caractérisé en ce qu'**une commande temporisée est prévue, grâce à laquelle le dispositif de positionnement maintient la brosse à dents à réchauffer dans la trajectoire du rayonnement IR pendant un laps de temps défini avec précision au préalable.

13. Dispositif selon l'une des revendications 7 à 12, **caractérisé en ce qu'**un dispositif d'évacuation est prévu, qui éloigne la brosse à dents du dispositif une fois le réchauffement effectué.

14. Dispositif selon l'une des revendications 7 à 13, **caractérisé en ce qu'**un microprocesseur permettant de commander et/ou programmer le dispositif de positionnement et/ou le dispositif d'acheminement et/ou la commande temporisée et/ou le dispositif d'évacuation est prévu.
